Europäisches Patentamt

European Patent Office

Office européen des brevets

(19)

(11) Publication number: **0 144 239 B1**

(12) **EUROPEAN PATENT SPECIFICATION**

(45) Date of publication of patent specification: **20.02.91**

(51) Int. Cl.⁵: **C08J 5/18, C08L 29/04, B32B 27/08, B32B 31/30**

(21) Application number: **84308429.4**

(22) Date of filing: **05.12.84**

(54) **Polymeric blends containing ethylene vinyl alcohol, films made therefrom e.g. molecularly oriented films, and methods of making such films.**

(30) Priority: **06.12.83 US 558820**
**14.11.84 US 670302**

(43) Date of publication of application:
**12.06.85 Bulletin 85/24**

(45) Publication of the grant of the patent:
**20.02.91 Bulletin 91/08**

(84) Designated Contracting States:
**AT BE CH DE FR GB IT LI LU NL SE**

(56) References cited:
**EP-A- 0 064 330**
**FR-A- 2 519 012**
**FR-A- 2 523 143**

(73) Proprietor: **AMERICAN NATIONAL CAN COMPANY**
**8770 West Bryn Mawr Avenue**
**Chicago, Illinois 60631(US)**

(72) Inventor: **Tse, Samuel W.**
**2300 Harvest Drive**
**Appleton, WI 54911(US)**
Inventor: **Schroeder, George O.**
**1527 N. Douglas**
**Appleton, WI 54911(US)**

(74) Representative: **Holdcroft, James Gerald, Dr. et al**
**Graham Watt & Co., Riverhead**
**Sevenoaks, Kent TN13 2BN(GB)**

EP 0 144 239 B1

## Description

The present invention relates to polymeric blends containing ethylene vinyl alcohol, films made therefrom e.g. molecularly oriented films, and methods of making such films.

Ethylene vinyl alcohol copolymer (EVOH) is known to provide excellent oxygen barrier properties when used in making packaging films. While films containing EVOH have been developed and are being used, the physical properties inherent to EVOH lend certain difficulties to the fabrication and use of EVOH-containing films. EVOH is stiff and punctures easily. EVOH is not readily thermoformed. Orientation of EVOH is accomplished only with difficulty, and within a narrow range of process operating parameters.

These problems are recognized and addressed inter alia in our European patent publication No. EP-A 64,330. The above application teaches improvements in technology relating to EVOH-containing films, and while the improvements do represent advances in technical knowledge, certain problems associated with the use of EVOH polymers remain.

It is also known that EVOH is susceptible to degradation of its oxygen barrier properties in the presence of high humidity, or moisture vapour content, at the EVOH layer. In order to ensure that the EVOH has a low humidity environment within which to operate, the EVOH is usually used in combination with other polymeric layers which are positioned so as to provide a moisture barrier between the EVOH layer and an environment potentially having an unacceptably high moisture content. Thus it is common to find EVOH used in multiple layer structures which include moisture barrier materials such as polyethylenes.

It is further known that EVOH loses some of its sensitivity to moisture, and thus has improved functionality as a barrier component of films, when it is molecularly oriented or otherwise formed without remelting after the making of a film containing EVOH. The process of orienting EVOH, however, has proved to be difficult because of its physical properties. In general, the EVOH, either alone, or in a multiple layer film, has a tendency to split or tear during the orientation process. Although the mechanism is not known for sure, this tendency might be explained in terms of the high degree of crystallinity of EVOH films. Whatever the mechanism, processing of EVOH subsequent to forming a film has proved to be extremely difficult. This difficulty has retarded large scale use of EVOH in oriented form. While some oriented films may be made which are functionally acceptable, many of those films exhibit a high haze level, which is commercially unacceptable.

One method of improving the processability of EVOH film is taught by our copending European patent application No. EP-A 63,006. In EP-A 63,006, it is taught that certain plasticizers may be blended into the EVOH to improve its performance in the orientation process. While these plasticizers do fulfill the plasticizing role, in that the plasticized EVOH film can be subsequently oriented with ease and the expected reduced moisture sensitivity can be achieved, the plasticizers migrate toward the surface of the film and change the film surface properties over a period of time. While the altered surface properties may not be critical for some uses, in many cases the changes in surface properties caused by the migration are not acceptable, and another means of modifying the properties of the EVOH layer is desired.

Another method of improving properties of an EVOH film is set forth in U.S. Patent 4,347,332 which proposes to blend nylon, along with a nylon plasticizer, with the EVOH in order to make a clear film. While a clear and desirable film may be made by this process, it has been found that, after a relatively short processing time in the extrusion of some of the polymer blends to form film, gels begin to appear in the film and get progressively worse until shut-down of the extrusion process is required.

The critical issue addressed by the present invention is that of modifying the EVOH to avoid its undesirable physical characteristics to make an EVOH layer susceptible to the commercial processes of extrusion and orientation, and to produce a commercially acceptable clear barrier film. The perplexing problem has been that of discovering a compound or family of compounds which can be blended with EVOH to form a compatible blend and which will also modify the undesirable properties, all without incurring the problems of migration and surface property changes commonly associated with plasticizers.

As disclosed hereinafter, this invention provides a novel, modified EVOH composition which can be extruded continuously for long periods of time to produce films tougher than similar films having unmodified EVOH. The films are easily susceptible to orientation in the machine direction -- i.e. uniaxially -- and in both the machine direction and cross-machine direction -- i.e. biaxially.

The resulting oriented film can be clear, that is, exhibit a low level of haze. The low haze in the oriented form, then, confirms the functional compatibility of the materials, and, in turn, good layer integrity, while satisfying the appearance requirements essential to commercial acceptance. The films can exhibit good oxygen barrier properties as exemplary of EVOH, and improved oxygen barrier properties at high humidity, as compared to those in the unoriented form, as exemplary of oriented EVOH. The physical properties of the film surface, and particularly surface friction can be more or less constant with time.

According to the present invention, there is provided a composition of matter which is a compatible polymeric blend of 1 percent to 40 percent by weight of a polyetheramide block copolymer (PEBA), and 60 percent to 99 percent by weight of ethylene vinyl alcohol copolymer. In some cases, the blend has a PEBA content of at least 5 percent by weight.

The same polyetheramide block copolymer used in practising this invention is also described as a blend constituent in FR-A-2 523 143. In FR-A-2 523 143 the copolymer is blended with EVA (ethylene vinyl acetate copolymer) in an amount of 0.5-20% - preferably 2-10% by weight - in order to improve the heat resistance of EVA adhesives without, however, adversely affecting their other qualities such as melt viscosity and softening point. Plainly, the problems tackled in FR-A-2 523 143 is wholly unrelated to the problems which the Applicants herein have sought to address.

The invention can be embodied in a polymeric film made from the above compatible blend of PEBA and EVOH. In some preferred embodiments, the film includes, on each surface thereof, a layer of nylon polymer, the result being a film having at least three layers with two layers of nylon and a layer of the blend material therebetween. There may be additional layers juxtaposed on either or both of the nylon layers, as discussed hereinafter. The multiple layer embodiments may provide ease of processing, economy, and abuse resistance.

In the most preferred form of the article of the invention, the film is molecularly oriented in a multiple layer structure. Orientation ratios are up to 5/1, e.g. 3/1 to 4/1 for uniaxial orientation and up to 4x4 for biaxial orientation. In such a preferred form, the overall film thickness is (0.025 mm) (1.0 mil) and the thickness of the blend layer of ethylene vinyl alcohol and polyetheramide block copolymer is 20% to 50% of the overall thickness of the film.

The invention further provides a method of making a film, which comprises forming a mixture of 1 weight percent to 40 weight percent of a polyetheramide block copolymer and 60 percent to 99 percent ethylene vinyl alcohol copolymer, extruding the mixture through an extruder and die apparatus to form a film, in which the mixture is present as a layer of blended materials of the mixture, and cooling the film. To make the most preferred article according to the invention, the method comprises coextruding the film with a layer of nylon on each surface of the blend to form a three layer film comprising nylon outer layers and a core layer of the blend. Manufacture of the preferred film is completed by reheating and molecularly orienting it.

The resulting film may be used directly, or may be combined with other layers in forming a more complex film. It is contemplated that the above-described blend layer may be incorporated into any one member of a large family of films. These films may be constructed by sequential forming and laminating of the various layers. They are preferably made by coextrusion of all the polymer layers together, optionally followed by simultaneous orientation of all the layers. Variations on these and other means of forming the films will occur to those skilled in the art.

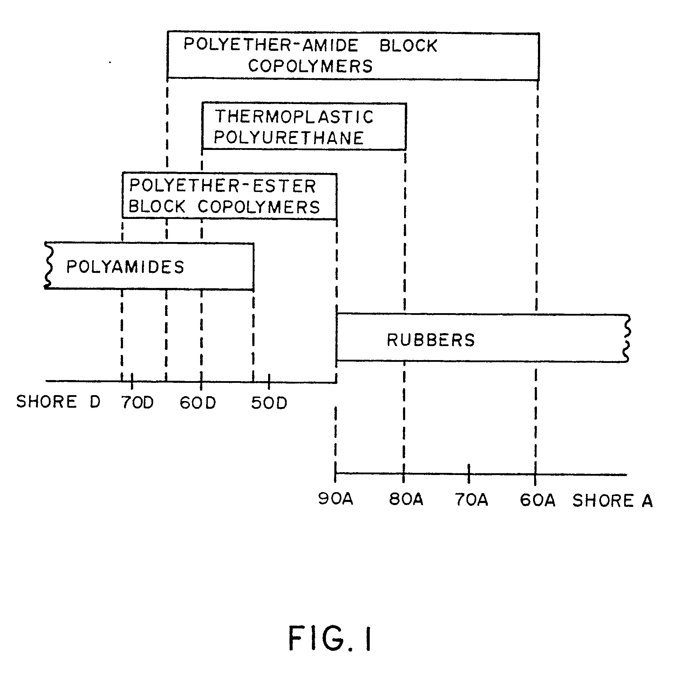

The invention will now be explained further in the following non-limitative detailed description, taken in conjunction with the accompanying drawings in which the sole figure, FIGURE 1, is a chart representation showing the Shore Hardness of PEBA polymers in relation to other polymers and rubbers.

EVOH copolymers useful for this invention generally contain at least 55, up to 80, weight percent vinyl alcohol. Preferred EVOH copolymers generally contain 60 to 75 weight percent of the vinyl alcohol moiety. The remainder of the molecule consists primarily of ethylene. There is usually present in the EVOH molecule a residual amount of vinyl acetate, since the EVOH is made by hydrolysis reaction of the ethylene vinyl acetate molecule. Commercially available EVOH is highly hydrolyzed, usually to greater than 99 percent by weight. Especially desirable EVOH copolymers are Soarnol® ET and Soarnol D sold by Nippon Gohsei, Japan, and EVAL EP-E and EP-F, sold by Kuraray, Japan.

The PEBA copolymers useful for this invention contain blocks of polyamide and polyether moieties in the polymer chain. A general formula for these polymers is:

$$HO - \left[ \begin{matrix} C \\ \| \\ O \end{matrix} - PA - \begin{matrix} C \\ \| \\ O \end{matrix} - O - PE - O \right]_n - H$$

for example, $5 \leqslant n \leqslant 10$

PA = polyamide
PE = polyether

3

The composition ratio PE/PA in the copolymer may vary from 20/80 to 80/20. The polyamide component may be any of the conventional polyamides, such as nylon 6, nylon 66, nylon 6/66, nylon 11 and nylon 12. The polyether component is usually, but not necessarily, selected from polyoxyethylene, polyoxypropylene and polyoxytetramethylene. The melting point of known PEBA's is about 120° to 205° C., and the Shore Hardness is 65D to 60A as shown on the chart of FIGURE 1. Preferred PEBA's are sold by Ato Chemie under the tradename PEBAX. Typical of their polymer resins is PEBAX 5512, which has a melting point of 195° C and Shore Hardness of 55D. This PEBA is generally desirable because its generally soft "hardness" is conductive to a softening modification of the hard and brittle EVOH when blended with the EVOH. Other successfully tested PEBA's are PEBAX 3533 and PEBAX 4033, also sold by Ato Chemie. PEBAX 3533 has a melting point of 152° c and Shore Hardness of 80A. PEBAX 4033 has a melting point of 168° C and a Shore Hardness of 40D.

The invention in its broadest aspect is represented by a blend composition of EVOH and PEBA. The blend contains, by weight, 60 percent to 99 percent EVOH and conversely 1 percent to 40 percent PEBA, wherein the PEBA functions in the role of a modifier for the EVOH-PEBA blend. The preferred range for common applications is 1 to 20 percent PEBA and 80 to 99 percent EVOH. That preference does vary depending on, for example, the specific EVOH and PEBA polymers used, the fabrication processes, the overall final structure, and the contemplated environments encountered by the finished package. The lower end of the range of blends, of about 1% PEBA, represents an area where the PEBA's have diminishing efficacy in the desired affect of the plasticizing function.

The plasticizing function and its affect on the material of the composition is detectable by determining changes in the properties of film as regards deformation of the film without rupture. In one type of deformation measurement, a strip of film is elongated as in an Instron Tensile Tester until the film breaks. Results are reported in terms of percent elongation up to the breaking point of the film and maximum tensile strength over the elongation test. In another measurement, an essentially continuous sheet of the film is molecularly stretch oriented.

Elongation tests are particularly useful as means for detecting differences in plastic films because they can be run at a variety of controlled environmental conditions, and particularly temperatures. As is seen hereinafter, films having different compositions may appear to have essentially identical properties at one set of conditions while having differing properties at another set of conditions. For example, polymeric blends of the invention having low levels of PEBA may not exhibit elongation properties different from those of unplasticized EVOH at room temperature. One might surmise, then, that the PEBA is not functioning as a plasticizer. However, significant plastic deformation differences may be seen when the test is conducted at elevated temperatures on the order of 80° C. to 100° C. Increase in the percent elongation before break, as compared to the unplasticized EVOH, is seen as evidence of increased plastic deformation resulting from the plasticizing affect of the PEBA. Thus, carefully chosen and controlled conditions are sometimes necessary for gathering evidence of functional differences between novel films of this invention and prior art films using EVOH without the PEBA being incorporated therein.

Stretch orientation tests are conducted at carefully selected and controlled operating conditions, By definition, the greater the amount of possible stretch/orientation for a given film, the greater the plastic deformation taking place. Increases in the stretch ratio for films having plasticized compositions are evidence of the plasticizing affect being exerted by the plasticizer.

Depending on the specific PEBA, and the specific EVOH, being use, compositions of up to 40 percent PEBA are contemplated. At the higher concentrations of PEBA, the oxygen barrier properties normally attributed to EVOH may be partially compromised, which is probably attributable to the dilution of the EVOH concentration in the blend. Above the upper limit of the range, i.e. above 40% PEBA, the beneficial plasticizing effect is traded for an unacceptable reduction in the oxygen barrier quality.

Another aspect of the invention is represented by films made from the EVOH-PEBA blends. While single layer unsupported film may be made by conventional extrusion techniques, the film is preferably combined with other layers, e.g. is formed as part of a coextrusion. A typical coextrusion comprises /nylon/blend/, in to to 0.01 to 0.05 mm (0.4 to 2.0 mils) thick, with the blend layer being about 20% to 50% of the total thickness of the two-layer composite. Another typical coextrusion is nylon/blend/nylon/, 0.01 to 0.02 mm (0.4 - 2.0 mils) thick, with the blend layer being about 20% to 50% of the thickness of the three-layer composite. The representations of the above plural layer coextrusions include leading and trailing slashes (/) which are intended to represent contemplated additional layers which may be positioned on either side, or on both sides, of the coextrusion to provide additional desired functional properties. Structures having exemplary ones of such additional layers are disclosed hereinafter.

A particularly advantageous and unpredicted property of the present EVOH-PEBA blends, as compared to the previously mentioned EVOH-nylon blends, is that they may be processed continuously through extruder-die apparatus for extended periods of time without gel formation or other polymer degradation. A secondary testing technique used to compare processability of EVOH-PEBA blends against conventional EVOH-nylon blends, involved processing two blends separately in a Brabender mixer. Each combination of blend materials was heated to melting and was mixed continuously for one hour while the torque required for mixing was continuously recorded. In both cases, the mixing torque was initially less than 0.738 N.m (1 lb. ft.) The torque increased steadily with the EVOH-nylon blend, while the torque of the EVOH-PEBA blend remained relatively constant. The blend compositions and the final torques after the one hour of mixing were:

| Blend | Final Torque | |
|---|---|---|
| 80% EVOH – 20% PEBA | (0.62 ft. lbs.) | (0.46 N.m) |
| 80% EVOH – 20% Nylon 6/66 | (9.79 ft. lbs.) | (7.23 N.m) |

The above test data indicate that material in an extruder and die apparatus processing a conventional EVOH-nylon blend may have process-time limitations, but make no such suggestion for processing blends of EVOH-PEBA blend. As a primary testing technique, we have subjected the EVOH-PEBA- blend to extended conventional extrusion processing and has found no time limitations on extrusion processing of blend compositions of the invention. Because the PEBA contains a significant proportion of polyamide building blocks, as do all nylons, it would be expected that PEBA's would have extrusive properties similar to those of nylon. As seen in the above test, the PEBA in the blend provides a critical functional capability not necessarily available when nylon alone is blended with EVOH.

As stated earlier, the most efficient use of EVOH as an oxygen barrier, and particularly as regards its use in a moist environment, is in an oriented form. The EVOH can be either uniaxially oriented or biaxially oriented. The benefits of this invention are best realised by this most efficient form of the use of EVOH. Recalling first that the normal orientation problems with EVOH are related to its stiffness and rigidity, and that these are commonly attributed to its crystallinity, in those cases where orientation is contemplated, the processing operations should provide minimal opportunity for crystal formation in the extrusion process. Thus, when the film is to be oriented, the film should be cooled quickly upon exiting the extruder die. Exemplary of acceptable processes to accomplish this are those where the film is cast against a chill roll as in cast extrusion or where the film is passed through a quenching liquid medium as in tubular water quenched extrusion.

Once the film is formed, it may then be reheated and oriented either uniaxially or biaxially. This can be done by an in-line operation or an out-of-line operation. In the orientation process, it appears that the PEBA functions as a plasticizing agent for the EVOH. It apparently accomplishes this, however, without the attendant migration of PEBA to the surface of the blend layer, as is common with conventional plasticizers, because no change in surface friction with time has been detected.

Acceptable uniaxial orientation ratios are 3/1 to 4/1. For biaxial orientation, acceptable ratios are up to about 4x4. In general, the higher the orientation ratio, whether uniaxial or biaxial, the better are the properties achieved. The preferred ratio, then, is the highest ratio which can be achieved efficiently on available hardware for the given EVOH blend composition and film; and that ratio will vary according to the hardware being used. While biaxial orientation has been represented as being the same amount, or uniform, in both axes of orientation, there may be substantial deviation from that sameness, with the only requirement being that the amount of stretch on each axis is up to about 4 times the original unstretched dimension. Thus 2x4 orientation is acceptable, for example, as is a 4x2 or a 4x3 or a 3x4. Thus any recitation of a range of "uniform" biaxial stretching ratios is meant to include all non-uniform ratios possible within the range. The resulting film in any of these cases is uniform and clear.

In retrospect, it is seen that the results obtained from making a film from a blend of EVOH and PEBA yield a basic understanding of the operation of the blend material as a polymer. The basic concept derived is that the PEBA functions to lend its softness, flexibility, and toughness to the otherwise relatively brittle and fragile EVOH, thereby modifying its properties to yield a film having improved extensibility and toughness. This concept holds true for all PEBA polymers. Some films which cannot otherwise be successfully oriented become orientable with the inclusion of PEBA. Also, some films which can be oriented without the inclusion of PEBA are easier to orient, and are tougher films, with the inclusion of PEBA. Thus, in some cases the inclusion of the PEBA makes orientation possible, and in other cases it makes orientation easier.

Regarding the selection of the specific PEBA to be used, the softer PEBA's can provide the necessary extensibility for moderate orientation ratios with the minimum use of PEBA. For the greater toughness required of films which are subjected to higher levels of orientation, and primarily as regards biaxial orientation, the harder PEBA's lend substantially more toughness than the softer PEBA's and are generally preferred. Where toughness is a significant requirement, for a package to serve properly in protecting a packaged product, the primary purpose of the PEBA may be to impart toughness, and a PEBA having more toughness, as represented by a harder Shore Hardness value, will be selected in preference to a less tough PEBA. Thus the selection of the specific PEBA to be used is more or less governed by the amount of orientation and by the process and use environments contemplated. As will be seen hereinafter, the selection of the specific PEBA may also be interdependent on other factors.

The primary factors governing the EVOH/PEBA ratio in the blend relate to the specific EVOH selected and the contemplated end use. Since the functionality of the EVOH as an oxygen barrier is usually the primary purpose of that layer, the selection of the specific EVOH polymer is usually the first step in designing the EVOH-PEBA blends. Given the selection of the specific EVOH, then for any PEBA selected, there is a range of acceptable properties available within the defined range of EVOH/PEBA ratios. Should that range of properties not satisfy the required parameters, then the selection of at least one of the polymers is changed. Since the EVOH is the primary operative polymer and the PEBA is primarily used for modifying the EVOH to facilitate its processing, then, in most cases, where a specific polymer combination does not provide the required parameters within the range of those available, then the preferred polymer for change, substitution, or modification, is the PEBA. However, if selecting an alternate PEBA, or modifying the PEBA, cannot be made to yield the required parameters, then an alternative EVOH is selected. For example, for use in moist environments, such as for packaging meat or cheese, preferred EVOH has a relatively high ethylene content, such as 38% to 48% e.g. 40% to 45%. Within the context of all EVOH polymers, those polymers having the higher ethylene content tend to be relatively softer and more extensible; and so typically they will have lower requirements so far as the amount of improvement in softness and extensibility is concerned. The blends designed for these uses generally will fall toward the higher end of the EVOH/PEBA ratios given, as the required amount of modification, to the EVOH, is somewhat less. The specific PEBA selected will, of course, have an affect, too.

For use in dry environments, such as packaging dry snacks like potato chips, the preferred EVOH has a relatively low ethylene content, such as 29% to 35%. Within the context of all EVOH polymers, the polymers having lower ethylene contents tend to be relatively harder and more brittle, and so, typically, will have higher requirements as far as the amount of improvement required in softness and extensiblity. The blends designed for these uses generally will fall toward the lower end of the EVOH/PEBA ratios given, as the required amount of modification, to the EVOH, is somewhat more. A larger EVOH/PEBA ratio may, of course be used where a softer PEBA may be selected while still providing both the required softness and the required toughness.

Regarding specific multiple layer film structures, the EVOH/PEBA mixture is most conveniently fabricated into a film containing the blend by means of a coextrusion process. In most cases, the blend layer is an interior layer in the structure, as compared to the exterior layers, when coextruded. A typical multiple layer structure includes nylon/blend/nylon, which may be a subassembly or a component of the completed film structure. As typical of completed film assemblies, there may be mentioned:

Typical Structures of Complete Films

```
nylon/blend/nylon/sealant
nylon/blend/nylon/EVA/sealant
nylon/blend/nylon/tie/EVA/sealant
nylon/blend/nylon/tie/EVA/tie/sealant
OPP/adh/nylon/blend/nylon/tie/EVA/tie/sealant
adh      = adhesive
EVA      = ethylene vinyl acetate
OPP      = oriented polypropylene
sealant  = heat sealable polymer
tie      = adhesive polymers
```

Typical materials used in the tie layers of the foregoing structures are the carboxy modified polymers sold by Chemplex as Plexar® 1 and by DuPont as CXA 3101. Typical materials used in the sealant layer are ionomer, EVA, and low density polyethylene (LDPE); and indeed blends of some of these materials are typically used. There are only two functional requirements of the sealant layer. First, it must have acceptable adhesion to the adjacent layer. Second, it must have sealing properties compatible with heat sealing, preferably by driving heat from a heat seal bar through all the layers between the sealant layer and the opposite surface of the film.

It is, of course, possible to make certain conventional modifications to the films, or to the processes of making them, without affecting the capabilities of the films to perform their intended functions.

The exemplary film assemblies as shown above may be desirably uniaxially oriented, such as by stretch orienting in the machine direction to make oriented films which are highly desirable for use in packaging dry snack foods. Similarly they may be biaxially oriented for other packaging uses. It is, of course, conventional to add layers to the film after the orientation operation. These additional layers, such as OPP, provide additional functional properties.

In the design of some films, it will be found desirable to improve the interlayer adhesion at certain of the layer interfaces. Where additional adhesion is desired within a coextruded film, a tie, or adhesive, polymer may be used as a thin layer for enhancing adhesion between the two layers it contacts, as shown in the above listing of typical structures of complete films. As taught in US-A 4,233,367, US-A 4,239,826 and US-A 4,254,169, a number of extrudable adhesives suitable for use are available. Typical adhesives for use in films of this invention are the products sold by Chemplex Company under the PLEXAR designation, the resins sold by Mitsubishi Chemical under the NOVATEC AP designation, and the resins sold by DuPont Company under the CXA designation.

These adhesives are usually olefinic polymers or copolymers which employ carboxy modifications of the general nature

$$-\overset{\text{O}}{\underset{}{\overset{\|}{\text{C}}}}-$$

which provide the desired bonding capabilities. These adhesive resins are commercially available, and their uses will be apparent to those skilled in the art.

## EXAMPLE 1

Pellets of Soarnol ET ethylene vinyl alcohol copolymer were mixed with pellets of PEBAX® 5512 copolymer in a weight ratio of 80% EVOH to 20% PEBA. The solid pellets were dry blended at room temperature to achieve a uniform mixture. The mixed pellets were extruded in a cast coextrusion process with nylon 6 on each side of the blend layer to form a three layer film of nylon/blend/nylon. The thus produced film was 0.072 mm (2.85 mils) thick. The film was uniaxially oriented at a stretch ratio of 3.5 to 1. The resulting stretched film was about 0.025 mm (1 mil) thick overall. The blend layer was about 0.01 mm (0.4 mil) thick. The oriented film was clear, indicating good compatibility between its components. Haze was 1%, according to ASTM D1003. Samples of the oriented film were tested for oxygen permeability and haze. The reported oxygen permeability was 49ml/m$^2$/24 h. day at 22.8°C (73°F), 100% R.H Haze was 1.0%. The oxygen permeability of the corresponding unoriented film of the same thickness and thickness ratios was greater than 200 ml/m$^2$/day under the same test conditions. At 0% R.H. and 22.8°C (73°F) the oxygen permeability of the test film was only 2.5 ml/m$^2$/day.

## EXAMPLE 2

A film was coextruded and oriented as in EXAMPLE 1 except that the blend ratio was 90% by weight EVOH and 10% PEBA. The oxygen permeability at 22.8°C (73°F), 100% R.H. was 32 ml/m$^2$/24 h. day, and the haze was 1.0%. The oxygen permeability was less than 1 ml/m$^2$/day at 0% R.H. and 22.8°C (73°F).

## COMPARATIVE EXAMPLE 1

A control film was made and oriented as in EXAMPLES 1 and 2 except that no PEBA was used. The core layer of the 3-layer film was 100% EVOH. The oxygen permeability was 24 ml/m$^2$/day at 22.8°C (73°F) 100% R.H., but the haze measurement was 3.9%. The film was a milky white on the roll. While the film may be functional as a barrier film, its appearance as characterized by the high haze makes it unacceptable for commercial application, and thus unsaleable.

EXAMPLE 3

Pellets of Soarnol ET were dry blended with pellets of PEBAX 5512 in a weight ratio of 80% Soarnol ET to 20% PEBAX, as in EXAMPLE 1. A 0.11 mm (4.25 mil) film was coextruded. The resulting film was biaxially oriented at a 2.5 x 2.5 stretch ratio. The resulting film had good clarity and tested oxygen permeability of 30 ml/m$^2$/24 h. day at 22.8°C (73°F), 100% R.H.

EXAMPLE 4

A 0.11 mm (4.25 mil) film was made as in EXAMPLE 3 except that the blend ratio was 90% Soarnol ET and 10% PEBAX 5512. The film was biaxially oriented at a 2.5 x 2.5 stretch ratio. The resulting film had good clarity and tested oxygen permeability of 27 ml/m$^2$/24 h. day at 22.8°C (73°F), 100% R.H.

Additional experiments were conducted to determine the affects of low levels of PEBA addition to EVOH, and particularly concentrating on blends having 1% to 5% PEBA and correspondingly 95% to 99% EVOH. These are compared to prior art films without PEBA and to films of the invention comprising 10% PEBA and 90% EVOH.

EXAMPLES 5 - 10

Cast coextrusion equipment was utilized to produce three-layer base films having a total thickness of 0.09 mm (3.5 mils). The two outer layers were nylon 6. The inner, or core, layer in each film was a blend of Soarnol DE EVOH and PEBAX 4033 polyetheramide block copolymer. The overall structure of the films was NYLON/BLEND/NYLON with corresponding weight percentages of 30/40/30. All film samples were produced with the same processing conditions. Samples of the three-layer base films were uniaxially stretch oriented to evaluate stretchability All the stretched samples were stretch oriented at the same conditions. Surface temperatures of the contacting rolls during stretching were approximately 110°C. Annealing temperature was 154°C. All the films ran well at 3.5/1 stretch ratio. The stretch ratio was then gradually increased for each sample until the film broke. The stretch ratio at break was recorded, and is submitted herein in Table 2 as an indication of plasticity imparted by the PEBA where the blend structure had increased stretch ratio as compared to a similar prior art 3-layer film using 100% EVOH as the core layer. The prior art 3-layer film was extruded and samples were oriented in the same manner as EXAMPLES 5-10 and is designated COMPARATIVE EXAMPLE 2.

## TABLE 2

| Example No. | Blend Composition | Maximum Stretch Ratio | Percent Increase over Control |
|---|---|---|---|
| Comparative No. 2 | 100% Soarnol DE | 4.10 | —— |
| 5 | 1% PEBA – 99% DE | 4.56 | 11% |
| 6 | 2% PEBA – 98% DE | 4.51 | 10% |
| 7 | 3% PEBA – 97% DE | 4.48 | 9% |
| 8 | 4% PEBA – 96% DE | 4.52 | 10% |
| 9 | 5% PEBA – 95% DE | 4.93 | 20% |
| 10 | 10% PEBA – 90% DE | 4.91 | 20% |

It is seen from Table 2 that as little as 1% PEBA in the blend consistently provides for an increase of about 10% to 20% in the maximum stretch ratio of the 3-layer film. Optical properties of all the films of EXAMPLES 5-10 were excellent up to the breaking point of the film.

The base films from which EXAMPLES 5-10 were taken, were further used for testing film clarity and oxygen barrier properties. Samples of each of the base films were stretch oriented at an orientation ratio of 3.5/1. The stretched samples are designated EXAMPLES 11-16; and their clarity and oxygen barrier properties are reported in Table 3. Comparative Example 3 is used as a control at 100% EVOH, 0% PEBA.

## TABLE 3

| Example No. | Blend Composition | Oxygen Transmission * | | Percent Haze |
|---|---|---|---|---|
| | | 100%R.H. 73°F. (23°C) | 0%R.H. 73°F. (23°C) | |
| Comparative Ex. 3 | 100% Soarnol DE | 1.9 | <1 | 5.6 |
| 11 | 1% PEBA-99% DE | 2.3 | <1 | 1.0 |
| 12 | 2% PEBA-98% DE | NM | NM | 1.0 |
| 13 | 3% PEBA-97% DE | 2.1 | <1 | 1.1 |
| 14 | 4% PEBA-96% DE | NM | NM | 1.4 |
| 15 | 5% PEBA-95% DE | 1.85 | <1 | 1.9 |
| 16 | 10% PEBA-90% DE | 2.0 | <1 | 3.3 |

* $cm^3/m^2$ – 24 hr. – mil thickness

NM = not measured

< = less than

It is seen from Table 3 that the clarity of the oriented film is improved even with low levels of addition of PEBA such as 1% to 5%. The oxygen transmission results confirm that the oxygen barrier property of EVOH is effective for blends of PEBA and EVOH at these ratios as well as at the levels illustrated in the earlier EXAMPLES.

EXAMPLES 17 - 22

Single layer films of the invention were tested for maximum elongation. The films were produced by extrusion forming of single layer films of the compositions of the individual examples and of Comparative Example 4. For the elongation test, a 2.54cm one inch wide strip of the film was clamped in the 2 opposing jaws of an Instron Tensile Tester with the jaws 5.08 cm (2 inches) apart. The jaws and sample were inside an enclosure so that the elongation test could be performed at selected and controlled temperatures.

When the desired temperature was reached inside the enclosure, the jaws were slowly moved apart, effecting elongation of the test film strip. The test was stopped when the film broke and the elongation was reported in percent as

$$\frac{\text{Length at break}}{\text{initial length}} \times 100.$$

The results of the tests are shown in Table 4, as the average of five test samples.

TABLE 4

| Example No. | Blend Composition | 80°C | | 90°C | | 100°C | |
|---|---|---|---|---|---|---|---|
| | | Percent Elongation | Change from Comparative Example | Percent Elongation | Change from Comparative Example | Percent Elongation | Change from Comparative Example |
| Comparative No. 4 | 100% EVOH | 577% | | 621 | | 654* | |
| 17 | 1% PEBA - 99% EVOH | 494% | - 14% | 565 | - 10% | 680* | + 4% |
| 18 | 2% PEBA - 98% EVOH | 522% | - 10% | 585 | - 6% | 700* | + 7% |
| 19 | 3% PEBA - 97% EVOH | 530% | - 8% | 588 | - 5% | 695* | + 6% |
| 20 | 4% PEBA - 96% EVOH | 591% | + 2% | 660 | + 6% | 638* | - 2% |
| 21 | 5% PEBA - 95% EVOH | 605% | + 5% | 672 | + 8% | 679* | + 4% |
| 22 | 10% PEBA - 90% EVOH | 635% | + 10% | 646* | + 4% | 658* | + 1% |

\* Film in at least one sample did not break at maximum jaw separation of (14 inches) (35.6 cm).

Recorded and calculated as $\frac{14}{2} \times 100 = 700\%$ elongation for the specific sample

Used 700% for computing average.

It is seen from Table 4 that as little as 1% PEBA is effective to increase elongation at 100° C. About 4% PEBA is effective to increase elongation at 80° C to 90° C.

Optical properties of all of EXAMPLES 17-20 were excellent.

Those skilled in the art will now recognize that minor amounts of nylon may be blended into the EVOH/PEBA blend, and same is contemplated wherever the word blend is recited herein.

In testing films according to the invention, including single layer films, no evidence was found of any film surface properties changing with time. Thus it is concluded that the PEBA does not lend variable surface properties to the EVOH-PEBA bland layer; and that the PEBA does not interfere with the functionality of the EVOH.

## Claims

1. A composition of matter which is a polymeric blend of
   (a) 1 percent to 40 percent by weight of a polyetheramide blcck copolymer; and
   (b) 60 percent to 99 percent of ethylene vinyl alcohol copolymer.

2. A blend according to claim 1, wherein the polyetheramide block copolymer has a Shore Hardness of 65D to 60A, preferably 55D to 80A.

3. A polymeric film made from or including a compatible polymeric blend according to claim 1 or claim 2.

4. A polymeric film according to claim 3, and including, on at least one surface thereof, a layer of nylon polymer.

5. A polymeric film according to claim 3 or claim 4, which has been molecularly oriented.

6. An oriented film according to claim 5, which film is uniaxially oriented at a ratio of up to 5/1 e.g. 3/1 to 4/1 or is biaxially oriented at a ratio of up to 4x4.

7. An oriented film according to claim 5, or 6, which comprises a layer formed by said blend and at least one other layer, the overall film thickness is 0.01 to 0.051 mm (0.4 to 2.0 mils) and the thickness of the blend layer is about 20% to 50% of the overall thickness of the film.

8. A molecularly oriented polymeric film, comprising:
   (a) a first layer consisting of a blend comprising (i) 1 percent to 40 percent by weight polyetheramide block copolymer and (ii) 60 percent to 99 percent ethylene vinyl alcohol copolymer;
   (b) second and third layers comprising nylon each disposed on a respective one of the opposed surfaces of the first layer; and
   (c) a fourth layer on a surface of the third layer and comprising a sealable polymer or copolymer, having sealing properties compatible with heat sealing.

9. A film according to claim 8, which includes a fifth layer of ethylene vinyl acetate between the fourth layer and the third layer.

10. A film according to claim 8, which includes fifth and sixth layers between the fourth layer and the third layer, the fifth layer being ethylene vinyl acetate, and the sixth layer being an adhesive polymer comprising a carboxy modified olefin polymer or copolymer, the fifth layer being adjacent the fourth layer, the sixth layer being adjacent the third layer, and the fifth and sixth layers having a common interface.

11. A film according to claim 8, 9 or 10, which is uniaxially oriented at an orientation ratio of up to 5/1 e.g. 3/1 to 4/1 or is biaxially oriented at a ratio of up to 4x4.

12. A film according to any of claims 8 to 11, wherein the composition of the fourth sealant layer is chosen from low density polyethylene, ethylene vinyl acetate, ionomer, and blends thereof.

13. A method of making a film, comprising;

(a) forming a mixture of 1 weight percent to 40 percent of polyetheramide block copolymer and 60 percent to 99 percent ethylene vinyl alcohol copolymer;

(b) extruding the mixture through an extruder and die apparatus to form a film in which said mixture is present as a layer of blended materials of said mixture; and

(c) cooling the film.

14. A method according to claim 13, including coextruding, on one or both surfaces of the film, one or two layers of nylon to form a plural layer film.

15. A method according to claim 13 or claim 14, including the subsequent steps of reheating the film and molecularly orienting it.

16. A method according to claim 15, wherein said film is uniaxially oriented at a ratio of up to 5/1 e.g. 3/1 to 4/1, or is biaxially oriented at a ratio of up to 4x4.

Claims FOR THE CONTRACTING STATE : AT

1. A method of making a polymeric composition, comprising blending together:

(a) 1 percent to 40 percent by weight of a polyetheramide block copolymer; and

(b) 60 percent to 99 percent of ethylene vinyl alcohol copolymer.

2. A method according to claim 1, wherein the polyetheramide block copolymer has a Shore Hardness of 65D to 60A, preferably 55D to 80A.

3. A polymeric film made from or including a compatible polymeric blend made according to claim 1 or claim 2.

4. A polymeric film according to claim 3, and including, on at least one surface thereof, a layer of nylon polymer.

5. A polymeric film according to claim 3 or claim 4, which has been molecularly oriented.

6. An oriented film according to claim 5, which film is uniaxially oriented at a ratio of up to 5/1 e.g. 3/1 to 4/1 or is biaxially oriented at a ratio of up to 4x4.

7. An oriented film according to claim 5, or 6, which comprises a layer formed by said blend and at least one other layer, the overall film thickness is 0.01 to 0.051 mm (0.4 to 2.0 mils) and the thickness of the blend layer is about 20% to 50% of the overall thickness of the film.

8. A molecularly oriented polymeric film, comprising:

(a) a first layer consisting of a blend comprising (i) 1 percent to 40 percent by weight polyetheramide block copolymer and (ii) 60 percent to 99 percent ethylene vinyl alcohol copolymer;

(b) second and third layers comprising nylon each disposed on a respective one of the opposed surfaces of the first layer; and

(c) a fourth layer on a surface of the third layer and comprising a sealable polymer or copolymer, having sealing properties compatible with heat sealing.

9. A film according to claim 8, which includes a fifth layer of ethylene vinyl acetate between the fourth layer and the third layer.

10. A film according to claim 8, which includes fifth and sixth layers between the fourth layer and the third layer, the fifth layer being ethylene vinyl acetate, and the sixth layer being an adhesive polymer comprising a carboxy modified olefin polymer or copolymer, the fifth layer being adjacent the fourth layer, the sixth layer being adjacent the third layer, and the fifth and sixth layers having a common interface.

11. A film according to claim 8, 9 or 10, which is uniaxially oriented at an orientation ratio of up to 5/1 e.g.

3/1 to 4/1 or is biaxially oriented at a ratio of up to 4x4.

12. A film according to any of claims 8 to 11, wherein the composition of the fourth sealant layer is chosen from low density polyethylene, ethylene vinyl acetate, ionomer, and blends thereof.

13. A method of making a film, comprising:
    (a) forming a mixture of 1 weight percent to 40 percent of polyetheramide block copolymer and 60 percent to 99 percent ethylene vinyl alcohol copolymer;
    (b) extruding the mixture through an extruder and die apparatus to form a film in which said mixture is present as a layer of blended materials of said mixture; and
    (c) cooling the film.

14. A method according to claim 13, including coextruding, on one or both surfaces of the film, one or two layers of nylon to form a plural layer film.

15. A method according to claim 13 or claim 14, including the subsequent steps of reheating the film and molecularly orienting it.

16. A method according to claim 15, wherein said film is uniaxially oriented at a ratio of up to 5/1 e.g. 3/1 to 4/1, or is biaxially oriented at a ratio of up to 4x4.


**Revendications**

1. Composition de mélange de polymères caractérisée en ce qu'elle est constituée de :
    a) 1 pour-cent à 40 pour-cent en poids d'un copolymère bloc polyéthéramide et
    b) 60 pour-cent à 99 pour-cent d'éthylène/alcool vinylique.

2. Composition suivant la revendication 1 caractérisée en ce que le copolymère bloc polyéthéramide comporte une dureté Shore de 65D à 60A et préférablement 55D à 80A.

3. Film de polymère constitué de ou comportant un mélange de polyméres compatibles suivant la revendication 1 ou 2.

4. Film polymère suivant la revendication 3 caractérisé en ce qu'il comporte, sur au moins une de ses surfaces une couche d'un polymère de nylon.

5. Film polymère suivant la revendication 3 ou 4 caractérisé en ce qu'il a été orienté moléculairement.

6. Film orienté suivant la revendication 5 caractérisé en ce que le film est orienté dans une direction axiale dans un rapport pouvant aller jusqu'à 5/1, par exemple 3/1 à 4/1 où est orienté biaxialement dans un rapport pouvant aller jusqu'à 4x4.

7. Film orienté suivant la revendication 5 ou 6 caractérisé en ce qu'il est constitué d'une couche formée du mélange et au moins une autre couche, l'épaisseur totale du film est de 0,01 à 0,051 mm, et l'épaisseur de la couche mélange est d'environ 20% à 50% de l'épaisseur totale du film.

8. Film polymère orienté moléculairement comprenant:
    a) une première couche constituée d'un mélange constitué de 1 pour-cent à 40 pour-cent en poids d'un copolymère bloc polyéthéramide et de 60 pour-cent à 99 pour-cent d'un copolymère alcool vinyle éthylène ;
    b) des seconde et troisième couches constituées chacune de nylon disposé respectivement sur l'une des surfaces opposées de la première couche et
    c) une quatrième couche sur une surface de la troisième couche qui est constituée d'un polymère ou d'un copolymère étanche ayant des propriétés d'étanchéité compatibles avec une étanchéité à chaud.

9. Film suivant la revendication 8 caractérisé en ce qu'il comprend une cinquième couche d'acétate vinyle

14

éthylène entre la quatrième et la troisième couche.

**10.** Film suivant la revendication 8 caractérisé en ce qu'il comprend des cinquième et sixième couches entre la quatrième couche et la troisième couche, la cinquième couche étant constituée d'acétate vinyle éthylène et la sixième couche étant constituée d'un polymère adhésif constitué d'un polymère ou copolymère d'oléfine modifiée carboxy, la cinquième couche étant adjacente à la quatrième couche, la sixième couche étant adjacente à la troisième couche et les cinquième et sixième couches comportant une interface commune.

**11.** Film suivant l'une quelconque des revendications 8,9 ou 10 caractérisé en ce qu'il est orienté suivant un axe dans un rapport d'orientation allant jusqu'à 5/1, par exemple 3/1 à 4/1, où est orienté biaxialement dans un rapport allant jusqu'à 4x4.

**12.** Film suivant l'une quelconque des revendications 8 à 11 caractérisé en ce que la composition de la quatrième couche d'étanchéité est choisie parmi les polyéthylènes à basse densité les acétates de vinyle éthtlène, les ionomères, et leurs mélanges.

**13.** Méthode de fabrication d'un film caractérisée en ce qu'elle comporte des étapes consistant à :
a) réaliser un mélange de 1 à 40 pour-cent en poids d'un copolymère blocs polyéthéramide et de 60 à 99 pour-cent d'un copolymère alcool vinyle éthylène ;
b) extruder le mélange au travers de la buse d'une extrudeuse pour former un film dans lequel le mélange est présent en tant que couche de matériaux mélangés dudit mélange et
c) refroidir le film.

**14.** Méthode suivant la revendication 13 caractérisée en ce qu'elle comprend la coextrusion sur une ou les deux surfaces du film, une ou deux couches de nylon pour former un film à plusieurs couches.

**15.** Méthode suivant la revendication 13 ou 14 caractérisée en ce qu'elle comprend les étapes subséquentes de réchauffage du film et d'orientation moléculaire de celuici.

**16.** Méthode suivant la revendication 15 caractérisée en ce que le film est orienté suivant un axe dans un rapport pouvant aller jusqu'à 5/1 par exemple 3/1 à 4/1, ou est orienté biaxiallement dans un rapport pouvant aller jusqu'à 4x4.

Revendications pour l'Etat contractant suivant : AT

**1.** Méthode de fabrication d'une composition de polymères caractérisée en ce qu'elle consiste à mélanger :
a) 1 pour-cent à 40 pour-cent en poids d'un copolymère bloc polyéthéramide et,
b) 60 pour-cent à 99 pour-cent d'éthylène/alcool vinylique.

**2.** Méthode suivant la revendication 1 caractérisée en ce que le copolymère bloc polyéthéramide comporte une dureté Shore de 65D à 60A et préférablement 55D à 80A.

**3.** Film de polymère constitué de ou comportant un mélange de polymères compatibles réalisé suivant la revendication 1 ou 2.

**4.** Film polymère suivant la revendication 3 caractérisé en ce qu'il comporte, sur au moins une de ses surfaces une couche d'un polymère de nylon.

**5.** Film polymère suivant la revendication 3 ou 4 caractérisé en ce qu'il a été orienté moléculairement.

**6.** Film orienté suivant la revendication 5 caractérisé en ce que le film est orienté dans une direction axiale dans un rapport pouvant aller jusqu'à 5/1, par exemple 3/1 à 4/1 où est orienté biaxialement dans un rapport pouvant aller jusqu'à 4x4.

**7.** Film orienté suivant la revendication 5 ou 6 caractérisé en ce qu'il est constitué d'une couche formée du mélange et au moins une autre couche, l'épaisseur totale du film est de 0,01 à 0,051 mm, et l'épaisseur de la couche mélange est d'environ 20% à 50% de l'épaisseur totale du film.

8. Film polymère orienté moléculairement comprenant:
   a) une première couche constituée d'un mélange constitué de 1 pour-cent à 40 pour-cent en poids d'un copolymère bloc polyéthéramide et de 60 pour-cent à 99 pour-cent d'un copolymère d'éthylène/alcool vinylique ;
   b) des seconde et troisième couches constituées chacune de nylon, disposées respectivement sur l'une des surfaces opposées de la première couche et
   c) une quatrième couche sur une surface de la troisième couche qui est constituée d'un polymère ou d'un copolymère étanche ayant des propriétés d'étanchéité compatibles avec une étanchéité à chaud.

9. Film suivant la revendication 8 caractérisé en ce qu'il comprend une cinquième couche d'éthylène/acétate de vinyle entre la quatrième et la troisième couche.

10. Film suivant la revendication 8 caractérisé en ce qu'il comprend des cinquième et sixième couches entre la quatrième couche et la troisième couche, la cinquième couche étant constituée d'éthylène/acétate de vinyle et la sixième couche étant constituée d'un polymère adhésif constitué d'un polymère ou copolymère d'oléfines carboxy modifiées, la cinquième couche étant adjacente à la quatrième couche, la sixième couche étant adjacente à la troisième couche et les cinquième et sixième couches comportant une interface commune.

11. Film suivant l'une quelconque des revendications 8,9 ou 10 caractérisé en ce qu'il est orienté suivant un axe dans un rapport d'orientation allant jusqu'à 5/1, par exemple 3/1 à 4/1, où est orienté biaxialement dans un rapport allant jusqu'à 4x4.

12. Film suivant l'une quelconque des revendications 8 à 11 caractérisé en ce que la composition de la quatrième couche d'étanchéité est choisie parmi les polyéthylènes à basse densité les éthylènes/acétates de vinyle, les ionomères, et leurs mélanges.

13. Méthode de fabrication d'un film caractérisée en ce qu'elle comporte des étapes consistant à :
    a) réaliser un mélange de 1 à 40 pour-cent en poids d'un copolymère blocs polyéthéramide et de 60 à 99 pour-cent d'un copolymère d'éthylène/alcool vinylique ;
    b) extruder le mélange au travers de la buse d'une extrudeuse pour former un film dans lequel le mélange est présent en tant que couche de matériaux mélangés dudit mélange et
    c) refroidir le film.

14. Méthode suivant la revendication 13 caractérisée en ce qu'elle comprend la coextrusion sur une ou les deux surfaces du film, une ou deux couches de nylon pour former un film à plusieurs couches.

15. Méthode suivant la revendication 13 ou 14 caractérisée en ce qu'elle comprend les étapes subséquentes de réchauffage du film et d'orientation moléculaire de celuici.

16. Méthode suivant la revendication 15 caractérisée en ce que le film est orienté suivant un axe dans un rapport pouvant aller jusqu'à 5/1 par exemple 3/1 à 4/1, ou est orienté biaxialement dans un rapport pouvant aller jusqu'à 4x4.

**Ansprüche**

1. Eine Materie-Zusammensetzung, die eine Polymermischung ist von
   (a) 1 bis 40 Gew.-% eines Polyätheramid-Blockcopolymeren und
   (b) 60 bis 99 Prozent Äthylen-Vinyl-Alkohol-Co-polymer.

2. Eine Mischung nach Anspruch 1, bei der das Polyätheramid-Blockcopolymer eine Shore Härte von 65D bis 60A, vorzugsweise 55D bis 80A, aufweist.

3. Ein Polymerfilm oder eine Polymerfolie, der bzw. die aus einer kompatiblen Polymermischung nach Anspruch 1 oder Anspruch 2 hergestellt ist oder diese enthält.

4. Ein Polymerfilm nach Anspruch 3, der auf wenigstens einer seiner Oberflächen eine Schicht aus Nylonpolymer enthält.

5. Ein Polymerfilm nach Anspruch 3 oder 4, der molekular orientiert worden ist.

6. Ein orientierter Film nach Anspruch 5, wobei der Film einachsig mit einem Verhältnis von bis zu 5/1, z.B. 3/1 bis 4/1, orientiert ist oder mit einem Verhältnis von bis zu 4x4 zweiachsig orientiert ist.

7. Ein orientierter Film nach Anspruch 5 oder 6, der eine Schicht, die aus der besagten Mischung gebildet ist, und wenigstens eine andere Schicht umfaßt, wobei die Gesamtfilmdicke 0,01 bis 0,051 mm (0,4 bis 2,0 Mils; 0,0004 bis 0,002 Zoll) ist und die Dicke der Mischungsschicht etwa 20% bis 50% der Gesamtdicke des Filmes beträgt.

8. Ein molekular orientierter Polymerfilm, umfassend:
(a) eine erste Schicht, die aus einer Mischung besteht, die (i) 1 bis 40 Gew.-% Polyätheramid-Blockcopolymer und (ii) 60% bis 99% Äthylen-Vinyl-Alkohol-Copolymer umfaßt;
(b) eine zweite und eine dritte Schicht, die Nylon umfaßt, wobei jede dieser Schichten auf einer entsprechenden Oberfläche der entgegengesetzten Oberflächen der ersten Schicht angeordnet ist; und
(c) eine vierte Schicht auf einer Oberfläche der dritten Schicht, die ein siegelfähiges Polymer oder Copolymer umfaßt, die Siegeleigenschaften aufweist, die mit Heißverschweißung verträglich sind.

9. Ein Film nach Anspruch 8, der eine fünfte Schicht aus Äthylen-Vinyl-Acetat zwischen der vierten Schicht und dritten Schicht enthält.

10. Ein Film nach Anspruch 8, der eine fünfte und eine sechste Schicht zwischen der vierten Schicht und der dritten Schicht enthält, wobei die fünfte Schicht Äthylen-Vinyl-Acetat ist und die sechste Schicht ein Kleb- oder Adhäsionspolymer ist, das ein carboxyliertes (Carboxy-modifiziertes) Olefin-Polymer oder -Copolymer umfaßt, die fünfte Schicht der vierten Schicht benachbart ist, die sechste Schicht der dritten Schicht benachbart ist und die fünfte und die sechste Schicht eine gemeinsame Zwischenschicht aufweisen.

11. Ein Film nach Anspruch 8, 9 oder 10, der einachsig mit einem Orientierungsverhältnis von bis zu 5/1, z.B. 3/1 bis 4/1, orientiert ist oder zweiachsig mit einem Verhältnis von bis zu 4x4 orientiert ist.

12. Ein Film nach einem der Ansprüche 8 bis 11, bei dem die Zusammensetzung der vierten Siegelschicht aus Polyäthylen niedriger Dichte, Äthylen-Vinyl-Acetat, Ionomer und Mischungen derselben ausgewählt ist.

13. Verfahren zur Herstellung eines Filmes, umfassend:
(a) Bilden einer Mischung von 1 Gew.-% bis 40% Polyätheramid-Blockcopolymer und 60% bis 99% Äthylen-Vinyl-Alkohol-Copolymer;
(b) Extrudieren der Mischung durch eine Extruderund Spritzmundstück-Apparatur, um eine Folie oder einen Film zu bilden, in dem die besagte Mischung als eine Schicht aus gemischten Materialien aus der besagten Mischung vorhanden ist, und
(c) Abkühlen der Folie oder des Filmes.

14. Verfahren nach Anspruch 13, das das Coextrudieren von einer oder zwei Schichten aus Nylon auf einer oder beiden Oberflächen der Folie oder des Filmes umfaßt, um eine Mehrschichtenfolie oder einen Mehrschichtenfilm zu bilden.

15. Verfahren nach Anspruch 13 oder 14, das die nachfolgenden Verfahrensstufen der Wiedererhitzung der Folie oder des Filmes und deren bzw. dessen molekulare Orientierung umfaßt.

16. Verfahren nach Anspruch 15, bei dem die Folie oder der Film einachsig mit einem Verhältnis von bis zu 5/1, z.B. 3/1 bis 4/1, orientiert ist oder zweiachsig mit einem Verhältnis von bis zu 4x4 orientiert ist.

Patentansprüche für folgenden Vertragsstaat : AT

1. Verfahren zum Herstellen einer Polymerzusammensetzung, das das Zusammenmischen umfaßt von:
   (a) 1 bis 40 Gew.-% eines Polyätheramid-Blockcopolymeren und
   (b) 60% bis 99% Äthylen-Vinyl-Alkohol-Copolymer.

2. Ein Verfahren nach Anspruch 1, bei dem das Polyätheramid-Blockcopolymer eine Shore Härte von 65D bis 60A, vorzugsweise 55D bis 80A, aufweist.

3. Ein Polymerfilm, der aus einer kompatiblen Polymermischung, die gemäß Anspruch 1 oder Anspruch 2 hergestellt ist, hergestellt ist oder diese Polymermischung enthält.

4. Ein Polymerfilm nach Anspruch 3, der auf wenigstens einer seiner Oberflächen eine Schicht aus Nylonpolymer enthält.

5. Ein Polymerfilm nach Anspruch 3 oder 4, der molekular orientiert worden ist.

6. Ein orientierter Film nach Anspruch 5, wobei der Film einachsig mit einem Verhältnis von bis zu 5/1, z.B. 3/1 bis 4/1, orientiert ist oder mit einem Verhältnis von bis zu 4x4 zweiachsig orientiert ist.

7. Ein orientierter Film nach Anspruch 5 oder 6, der eine Schicht, die aus der besagten Mischung gebildet ist, und wenigstens eine andere Schicht umfaßt, wobei die Gesamtfilmdicke 0,01 bis 0,051 mm (0,4 bis 2,0 Mils; 0,0004 bis 0,002 Zoll) ist und die Dicke der Mischungsschicht etwa 20% bis 50% der Gesamtdicke des Filmes beträgt.

8. Ein molekular orientierter Polymerfilm, umfassend:
   (a) eine erste Schicht, die aus einer Mischung besteht, die (i) 1 bis 40 Gew.-% Polyätheramid-Blockcopolymer und (ii) 60% bis 99% Äthylen-Vinyl-Alkohol-Copolymer umfaßt;
   (b) eine zweite und eine dritte Schicht, die Nylon umfaßt, wobei jede dieser Schichten auf einer entsprechenden Oberfläche der entgegengesetzten Oberflächen der ersten Schicht angeordnet ist; und
   (c) eine vierte Schicht auf einer Oberfläche der dritten Schicht, die ein siegelfähiges Polymer oder Copolymer umfaßt, die Siegeleigenschaften aufweist, die mit Heißverschweißung verträglich sind.

9. Ein Film nach Anspruch 8, der eine fünfte Schicht aus Äthylen-Vinyl-Acetat zwischen der vierten Schicht und dritten Schicht enthält.

10. Ein Film nach Anspruch 8, der eine fünfte und eine sechste Schicht zwischen der vierten Schicht und der dritten Schicht enthält, wobei die fünfte Schicht Äthylen-Vinyl-Acetat ist und die sechste Schicht ein Kleb- oder Adhäsionspolymer ist, das ein carboxyliertes (Carboxy-modifiziertes) Olefin-Polymer oder -Copolymer umfaßt, die fünfte Schicht der vierten Schicht benachbart ist, die sechste Schicht der dritten Schicht benachbart ist und die fünfte und die sechste Schicht eine gemeinsame Zwischenschicht aufweisen.

11. Ein Film nach Anspruch 8, 9 oder 10, der einachsig mit einem Orientierungsverhältnis von bis zu 5/1, z.B. 3/1 bis 4/1, orientiert ist oder zweiachsig mit einem Verhältnis von bis zu 4x4 orientiert ist.

12. Ein Film nach einem der Ansprüche 8 bis 11, bei dem die Zusammensetzung der vierten Siegelschicht aus Polyäthylen niedriger Dichte, Äthylen-Vinyl-Acetat, Ionomer und Mischungen derselben ausgewählt ist.

13. Verfahren zur Herstellung eines Filmes, umfassend:
    (a) Bilden einer Mischung von 1 Gew.-% bis 40% Polyätheramid-Blockcopolymer und 60% bis 99% Äthylen-Vinyl-Alkohol-Copolymer;
    (b) Extrudieren der Mischung durch eine Extruderund Spritzmundstück-Apparatur, um eine Folie oder einen Film zu bilden, in dem die besagte Mischung als eine Schicht aus gemischten Materialien aus der besagten Mischung vorhanden ist, und
    (c) Abkühlen der Folie oder des Filmes.

14. Verfahren nach Anspruch 13, das das Coextrudieren von einer oder zwei Schichten aus Nylon auf einer oder beiden Oberflächen der Folie oder des Filmes umfaßt, um eine Mehrschichtenfolie oder einen Mehrschichtenfilm zu bilden.

15. Verfahren nach Anspruch 13 oder 14, das die nachfolgenden Verfahrensstufen der Wiedererhitzung der Folie oder des Filmes und deren bzw. dessen molekulare Orientierung umfaßt.

16. Verfahren nach Anspruch 15, bei dem die Folie oder der Film einachsig mit einem Verhältnis von bis zu 5/1, z.B. 3/1 bis 4/1, orientiert ist oder zweiachsig mit einem Verhältnis von bis zu 4x4 orientiert ist.

POLYETHER-AMIDE BLOCK COPOLYMERS

THERMOPLASTIC POLYURETHANE

POLYETHER-ESTER BLOCK COPOLYMERS

POLYAMIDES

RUBBERS

SHORE D   70D   60D   50D

90A   80A   70A   60A   SHORE A

FIG. I